# EUROPÄISCHE PATENTSCHRIFT

(11) **EP 2 425 991 B1**
(45) Veröffentlichungstag und Bekanntmachung des Hinweises auf die Patenterteilung: **20.03.2013**
(21) Anmeldenummer: 11175000.6
(22) Anmeldetag: 22.07.2011
(51) Int. Cl.: B60C 5/14, B60C 9/02, B60C 9/14

(54) **Fahrzeugluftreifen**
Pneumatic tyres for a vehicle
Pneus de véhicule

(30) Priorität: 01.09.2010 DE 102010037264
(43) Veröffentlichungstag der Anmeldung: 07.03.2012
(73) Patentinhaber: Continental Reifen Deutschland GmbH, 30165 Hannover (DE)
(72) Erfinder: Schunack, Michael, 30171 Hannover (DE)
(74) Vertreter: Finger, Karsten

(56) Entgegenhaltungen:
- EP-A2- 1 145 871
- WO-A1-2011/042435
- JP-A- 10 035 217

## Beschreibung

Die Erfindung betrifft einen Fahrzeugluftreifen in radialer Bauart mit einer der Reifeninnenseite zugewandten Innenschicht, einer Karkasslage mit in radialer Richtung verlaufenden Festigkeitsträgern aus Stahlkord und einer zwischen der Karkasslage und der Innenschicht eingebrachten Squeegeelage.

Bei Fahrzeugluftreifen für Schwerlastfahrzeuge, beispielsweise für Lastkraftwagen, Busse oder dergleichen, kann im Laufe der Lebensdauer des Reifens das Phänomen auftreten, dass die Stahlkorde der Karkasslage an der Reifeninnenseite durchscheinen. Um diesen Effekt zu verhindern oder zumindest zu reduzieren, ist es üblich, eine sogenannte Squeegeelage zwischen die Karkasslage und die Innenschicht einzubringen. Da die Squeegeelage mit den Stahlkorden in der Karkasslage in Berührung kommen kann, wird sie üblicher Weise aus einer Kautschukmischung hergestellt, die der Gummierungsmischung der Karkasslage sehr ähnlich ist, insbesondere sollen beide Mischungen die hohen Anforderungen bezüglich Stahlkordhaftung und Haltbarkeit erfüllen. Es ist daher üblich und auch notwendig, in der Kautschukmischung für die Squeegeelage Naturkautschuk bzw. einen hohen Anteil an Naturkautschuk zu verwenden sowie ein entsprechendes Haftvermittlersystem zur Stahlkordhaftung einzubringen. Diese Maßnahmen machen die Herstellung der Squeegeelagenmischung sehr teuer. Dies ist insbesondere dann besonders nachteilig, wenn die Squeegeelagendicke im geheizten Reifen sehr hoch ausfallen muss, beispielsweise in der Größenordnung von 1 mm bis 2 mm, um ein Durchscheinen der Karkasskorde zu verhindern.

Ein Fahrzeugluftreifen der eingangs genannten Art ist aus der EP-B 1 145 871 bekannt. In dieser Druckschrift steht es im Vordergrund, die Hafteigenschaften der Squeegeelage zur Karkasslage zu verbessern. Die Squeegeelage wird daher derart aufgebaut, dass sie wenigstens eine an der Karkasslage anstoßende Gummizusammensetzung aufweist, welche einen basischen anorganischen Füllstoff enthält.

Der Erfindung liegt die Aufgabe zugrunde, die Squeegeelage in einem Fahrzeugluftreifen wesentlich kostengünstiger als bisher herstellen zu können, wobei eine gute Stahlkordhaftung, die notwendige Haltbarkeit und der Effekt, ein Durchscheinen der Karkasskorde zu verhindern oder zu vermindern, gewährleistet sein sollen.

Gelöst wird die gestellte Aufgabe erfindungsgemäß dadurch, dass die Squeegeelage zweischichtig ausgeführt ist, wobei die der Karkasslage zugewandte äußere Schicht auf einer Haftmischung basiert und hinsichtlich guter Stahlkordhaftung und langer Haltbarkeit ausgelegt bzw. optimiert ist und die Kautschukmischung für die innere Schicht auf einer Kautschukmischung basiert, welche keine oder kaum Mischungsbestandteile, die eine Haftmischung charakterisieren, enthält, wobei die äußere Schicht der Squeegeelage als Haftvermittler einen oder mehrere der Zusätze Resorcin, Cobaltsalz oder HMMM, jeweils in einem Anteil von 0,5 phr bis 3,0 phr, sowie ZnO in einem Anteil von mindestens 4 phr enthält.

Insbesondere beträgt die Dicke der äußeren Schicht der Squeegeelage zwischen 0,1 mm und 1 mm.

Ein erfindungsgemäß ausgeführter Fahrzeugluftreifen enthält daher eine zweischichtige Squeegeelage, bei der die der Karkasslage zugewandte und an dieser anliegende äußere Schicht aus einer Kautschukmischung hergestellt ist, welche eine gute Stahlkordhaftung und die erforderliche Haltbarkeit gewährleistet, wobei diese Schicht wesentlich dünner ausgeführt sein kann als die innere Schicht. Die innere Schicht ist deutlich kostengünstiger herstellbar als die äußere Schicht und gewährleistet, dass die Karkasskorde nicht durchscheinen können.

Bei einer bevorzugten Ausführungsform der Erfindung ist die Dicke der äußere Schicht der Squeegeelage geringer als die Dicke der inneren Schicht. Vor allem bei hohen Squeegeelagendicken lässt sich mit dieser Maßnahme eine merkliche Kostenreduktion erzielen.

Die äußere Schicht der Squeegeelage enthält als Haftvermittler einen, insbesondere jedoch mehrere oder sämtliche der Zusätze Resorcin, Cobaltsalz oder HMMM, jeweils in einem Anteil von 0,5 phr bis 3,0 phr, sowie ZnO in einem Anteil von mindestens 4 phr. Die äußere Schicht wird daher vorzugsweise als typische Haftschicht ausgeführt.

Für die mechanischen Eigenschaften der äußeren Schicht ist es ferner von Vorteil, wenn diese Silika in einem Anteil von 3,0 phr bis 10 phr enthält.

Die äußere Schicht enthält ferner in der Kautschukkomponente mindestens 60 phr Naturkautschuk, hingegen enthält die innere Schicht in der Kautschukkomponente höchstens 60 phr Naturkautschuk. Dabei kann die innere Schicht in der Kautschukkomponente einen oder mehrere Synthesekautschuk(e), wie BR und/oder SBR enthalten, wobei auch ausschließlich Synthesekautschuk in dieser Schicht eingesetzt werden kann. Auch diese Maßnahme bewirkt eine deutliche Kostenreduktion, ohne die Funktion der inneren Schicht nachteilig zu beeinflussen.

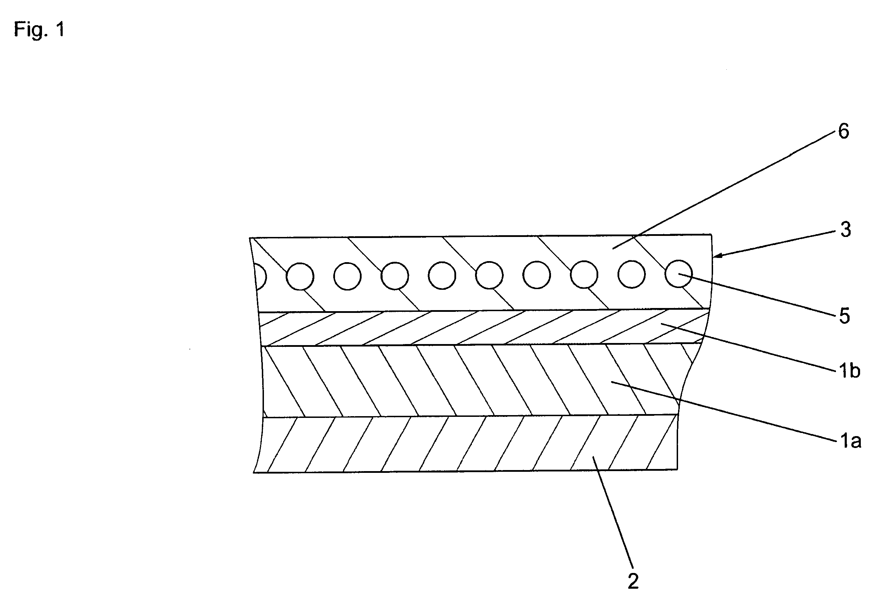

Weitere Merkmale, Vorteile und Einzelheiten der Erfindung werden anhand der Zeichnung, die schematisch ein Ausführungsbeispiel der Erfindung darstellt, näher beschrieben. Die einzige Zeichnungsfigur, Fig. 1, zeigt eine axiale Schnittdarstellung - in Umfangsrichtung und somit quer zum Verlauf der Karkasskorde - durch einen Ausschnitt einer im Reifen angeordneten Squeegeelage.

Die Erfindung befasst sich mit einer Ausführung einer Squeegeelage 1 in einem Fahrzeugluftreifen für Schwerlastfahrzeuge, Lastkraftwagen, Busse und dergleichen. Die aus Gummimaterial bestehende Squeegeelage 1 befindet sich, wie es Fig. 1 zeigt, zwischen der dem Reifeninnenraum zugewandten Innenschicht 2 und der Karkasslage 3. Die Karkasslage 3 besteht aus in radialer Richtung bzw. im Wesentlichen in radialer Richtung verlaufenden Karkasskorden 5 aus Stahl und der Karkassgummierung 6, in welche die Karkasskorde 5 eingebettet sind. Die Squeegeelage 1 ist zweischichtig aufgebaut und weist eine mit der Innenschicht 2 in Kontakt stehende inneren Schicht 1a und eine mit der Karkasslage 3 in Kontakt stehende äußere Schicht 1b auf. Die an der Karkasslage 3 anliegende äußere Schicht 1b weist eine im Wesentlichen konstante Dicke von 0,1 mm bis 1 mm, insbesondere von 0,5 mm bis 1,0 mm, auf, die ebenfalls im Wesentlichen konstante Dicke der inneren Schicht 1a beträgt zwischen 0,5 mm und 1,5 mm. Die der äußeren Schicht 1b zugrunde liegende Kautschukmischung wird derart ausgeführt, dass sie an der Karkasslage 3 gut haftet und eine gute Dauerhaltbarkeit aufweist. Insbesondere ist es wichtig, dass die Kautschukmischung für die äußere Schicht 1b eine gute Stahlkordhaftung aufweist, für den Fall, dass im Laufe des Reifenlebens Stahlkorde aus der Karkasslage mit der Schicht 1b in Kontakt kommen. Die äußere Schicht 1b ist daher insbesondere aus einer Haftmischung, vorzugsweise aus einer der üblichen Stahlkordgummierungsmischungen, hergestellt, welche eine der Karkassgummierungsmischung sehr ähnliche Mischung ist. Tabelle 1 enthält ein Mischungsbeispiel M1 für die äußere Schicht 1b, wobei die wesentlichen Mischungsbestandteile sowie deren Anteile in phr (parts per 100 parts rubber) angegeben sind.

**Tabelle 1**

| **M1 (äußere Schicht 1b)** | |
|---|---|
| **Mischungsbestandteile** | **Anteile (phr)** |
| NR | 100,0 |
| N326 (Ruß) | 55,0 |
| Silika (SiO₂) | 8,0 |
| Resorcin | 1,5 |
| Cobaltsalz | 1,5 |
| HMMM | 1,5 |
| Öl | 4,0 |
| Alterungsschutzmittel | 2,0 |
| ZnO | 8,0 |
| Beschleuniger (z. B. DCBS) | 1,5 |
| Schwefel | 5,5 |

Der Anteil an Naturkautschuk in dieser Mischung kann zwischen 60 phr und 100 phr betragen, wobei neben Naturkautschuk in der Mischung auch Synthesekautschuk, beispielsweise BR oder SBR, enthalten sein kann. Ein gewisser Silika-Anteil von 3,0 phr bis maximal 10 phr in der Mischung ist für die Haltbarkeit von Vorteil. Resorcin, HMMM, Cobaltsalz und ZnO (in einem Anteil von mindestens 4 phr) sind für eine gute Stahlkordhaftung verantwortlich und können in den für solche Mischungen üblichen Anteilen enthalten sein. Um eine gute Haftung sicherzustellen, werden langsam vernetzende Beschleuniger, wie DCBS, verwendet, die aber teurer sind als schneller vulkanisierende Beschleuniger, wie CBS oder TBBS.

Die mit der Innenschicht 2 in Kontakt stehende innere Schicht 1a weist eine ähnliche Steifigkeit wie die äußere Schicht 1b auf. Unter ähnlicher Steifigkeit ist zu verstehen, dass die Härten (Shore A) der Schichten 1a und 1b um nicht mehr als 20 % voneinander abweichen. Die Kautschukmischung für die Schicht 1a weist ferner eine Viskosität auf, die mindestens jener der Mischung für die Schicht 1b entspricht, um bereits beim Reifenaufbau eine Kordpenetration effektiv zu unterbinden.

Die innere Schicht 1a ist aus einer Kautschukmischung hergestellt, welche wesentlich kostengünstiger herstellbar ist, als die äußere Schicht 1b, jedoch den Zweck, ein Durchscheinen der Karkasskorde an der Innenseite des Reifens zu verhindern, voll erfüllt. Ein Mischungsbeispiel M2 für die innere Schicht 1a gibt Tabelle 2 wieder, die Anteile der Mischungsbestandteile sind auch hier in phr angegeben.

**Tabelle 2**

| **M2 (innere Schicht 1a)** | |
|---|---|
| **Bestandteile** | **Anteile (phr)** |
| NR | 50,0 |
| SBR 1500 | 50,0 |
| N326 (Ruß) | 68,0 |
| Öl | 8,0 |
| Alterungsschutzmittel | 2,0 |
| ZnO | 3,0 |
| Beschleuniger (z. B. CBS oder TBBS) | 3,0 |
| Schwefel | 1,5 |

Die Kautschukmischung M2 für die innere Schicht 1a weist bis zu 60 Gewichtsteile Naturkautschuk und als weitere Kautschukkomponente Styrol-Butadien-Kautschuk, beispielsweise SBR 1500, auf. In der Kautschukkomponente der Kautschukmischung M2 können weiters andere Synthesekautschuke, wie BR, enthalten sein, wobei der Anteil an Synthesekautschuk bis zu 100 phr betragen kann. Die Kautschukmischung M2 enthält vorzugsweise keine eine Stahlkordhaftung bewirkenden Zusätze wie Resorcin, HMMM, und Cobaltsalz. Als Füllstoff enthält diese Mischung ausschließlich Ruß. Der Anteil an ZnO ist gegenüber der Kautschukmischung für die äußere Schicht 1b deutlich reduziert, da ZnO hier nicht für den Aufbau einer Haftschicht benötigt wird. Des weiteren kann in dieser Mischung auf teure Beschleuniger, wie DCBS, verzichtet werden, da die Mischung nicht so langsam vulkanisieren muss, wie dies für eine Haftmischung erforderlich ist.

### Bezugsziffernliste

- 1: Squeegeelage
- 1a: innere Schicht
- 1b: äußere Schicht
- 2: Innenschicht
- 3: Karkasslage
- 5: Karkasskord,
- 6: Karkassgummierung

## Patentansprüche

1. Fahrzeugluftreifen in radialer Bauart mit einer der Reifeninnenseite zugewandten Innenschicht (2), einer Karkasslage (3) mit in radialer Richtung verlaufenden Festigkeitsträgern aus Stahlkord (5) und einer zwischen der Karkasslage (3) und der Innenschicht (2) eingebrachten Squeegeelage (1),
**dadurch gekennzeichnet,**
**dass** die Squeegeelage (1) zweischichtig ausgeführt ist, wobei die der Karkasslage (3) zugewandte äußere Schicht (1b) auf einer Haftmischung basiert und hinsichtlich guter Stahlkordhaftung und langer Haltbarkeit ausgelegt bzw. optimiert ist und die Kautschukmischung, auf welcher die innere Schicht (1a) basiert, keine oder kaum Mischungsbestandteile, die eine Haftmischung charakterisieren, enthält, wobei die äußere Schicht (1b) der Squeegeelage als Haftvermittler einen oder mehrere der Zusätze Resorcin, Cobaltsalz oder HMMM, jeweils in einem Anteil von 0,5 phr bis 3,0 phr, sowie ZnO in einem Anteil von mindestens 4 phr enthält.

2. Fahrzeugluftreifen nach Anspruch 1, **dadurch gekennzeichnet, dass** die Dicke der äußeren Schicht (1b) der Squeegeelage (1) zwischen 0,1 mm und 1 mm beträgt.

3. Fahrzeugluftreifen nach Anspruch 1, **dadurch gekennzeichnet, dass** die Dicke der äußeren Schicht (1b) der Squeegeelage (1) geringer ist als die Dicke der inneren Schicht (1a).

4. Fahrzeugluftreifen nach einem der Ansprüche 1 bis 3, **dadurch gekennzeichnet, dass** die äußere Schicht (1b) Silika in einem Anteil von 3,0 phr bis 10 phr enthält.

5. Fahrzeugluftreifen nach einem der Ansprüche 1 bis 4, **dadurch gekennzeichnet, dass** die äußere Schicht (1b) in der Kautschukkomponente mindestens 60 phr Naturkautschuk enthält.

6. Fahrzeugluftreifen nach Anspruch 1 oder 2, **dadurch gekennzeichnet, dass** die innere Schicht (1a) in der Kautschukkomponente höchstens 60 phr Naturkautschuk enthält.

7. Fahrzeugluftreifen nach Anspruch 1, 2 oder 3, **dadurch gekennzeichnet, dass** die innere Schicht (1a) in der Kautschukkomponente Synthesekautschuk, wie BR und/oder SBR, in einem Anteil von bis zu 100 phr enthält.

## Claims

1. Pneumatic vehicle tyre of a radial type of construction with an inner layer (2), facing the inner side of the tyre, a carcass ply (3), with reinforcing elements of steel cord (5) running in the radial direction, and a squeegee ply (1), inserted between the carcass ply (3) and the inner layer (2), **characterized in that** the squeegee ply (1) is of a two-layered configuration, the outer layer (1b), facing the carcass ply (3), being based on an adhesive mixture and designed or optimized with a view to good steel cord adhesion and long durability, and the rubber mixture on which the inner layer (1a) is based containing no or scarcely any constituents in its mixture that characterize an adhesive mixture, the outer layer (1b) of the squeegee ply containing as an adhesion promoter one or more of the additives resorcinol, cobalt salt or HMMM, in each case in a proportion of 0.5 phr to 3.0 phr, and also ZnO, in a proportion of at least 4 phr.

2. Pneumatic vehicle tyre according to Claim 1, **characterized in that** the thickness of the outer layer (1b) of the squeegee ply (1) is between 0.1 mm and 1 mm.

3. Pneumatic vehicle tyre according to Claim 1, **characterized in that** the thickness of the outer layer (1b) of the squeegee ply (1) is less than the thickness of the inner layer (1a).

4. Pneumatic vehicle tyre according to one of Claims 1 to 3, **characterized in that** the outer layer (1b) contains silica in a proportion of 3.0 phr to 10 phr.

5. Pneumatic vehicle tyre according to one of Claims 1 to 4, **characterized in that** the outer layer (1b) contains in the rubber component at least 60 phr of natural rubber.

6. Pneumatic vehicle tyre according to Claim 1 or 2, **characterized in that** the inner layer (1a) contains in the rubber component at most 60 phr of natural rubber.

7. Pneumatic vehicle tyre according to Claim 1, 2 or 3, **characterized in that** the inner layer (1a) contains in the rubber component synthetic rubber, such as BR and/or SBR, in a proportion of up to 100 phr.

## Revendications

1. Pneu de véhicule de type radial comportant une couche interne (2) tournée vers la face interne du pneu, une bande de carcasse (3) comportant des renforts en câble d'acier (5) s'étendant en direction radiale et une bande de raccord (1) insérée entre la bande de carcasse (3) et la couche interne (2),
**caractérisé en ce que**
la bande de raccord (1) est constituée de deux couches, la couche externe (1b) tournée vers la bande de carcasse (3) étant à base d'un mélange adhésif et conçue ou optimisée eu égard à une bonne adhérence des câbles d'acier et une longue durabilité et le mélange de caoutchouc qui est à la base de la couche interne (1a) ne contenant pas ou pratiquement pas de composants de mélange qui caractérisent un mélange adhésif, la couche externe (1b) de la bande de raccord contenant en tant que promoteur d'adhérence un ou plusieurs des additifs résorcinol, sel de cobalt ou HMMM, chacun en une proportion de 0,5 phr à 3,0 phr, ainsi que ZnO en une proportion d'au moins 4 phr.

2. Pneu de véhicule selon la revendication 1, **caractérisé en ce que** l'épaisseur de la couche externe (1b) de la bande de raccord (1) est comprise entre 0,1 mm et 1 mm.

3. Pneu de véhicule selon la revendication 1, **caractérisé en ce que** l'épaisseur de la couche externe (1b) de la bande de raccord (1) est inférieure à l'épaisseur de la couche interne (la).

4. Pneu de véhicule selon l'une quelconque des revendications 1 à 3, **caractérisé en ce que** la couche externe (1b) contient de la silice en une proportion de 3,0 phr à 10 phr.

5. Pneu de véhicule selon l'une quelconque des revendications 1 à 4, **caractérisé en ce que** la couche externe (1b) contient dans le composant caoutchouc au moins 60 phr de caoutchouc naturel.

6. Pneu de véhicule selon la revendication 1 ou 2, **caractérisé en ce que** la couche interne (1a) contient dans le composant caoutchouc au maximum 60 phr de caoutchouc naturel.

7. Pneu de véhicule selon la revendication 1, 2 ou 3, **caractérisé en ce que** la couche interne (1a) contient dans le composant caoutchouc du caoutchouc synthétique, tel que BR et/ou SBR, en une proportion allant jusqu'à 100 phr.
